# EUROPEAN PATENT SPECIFICATION

(11) **EP 3 120 066 B1**
(45) Date of publication and mention of the grant of the patent: **08.01.2020**
(21) Application number: 15718084.5
(22) Date of filing: 12.03.2015
(51) Int. Cl.: F16L 37/14

(54) **CONNECTION DEVICE**
VERBINDUNGSVORRICHTUNG
DISPOSITIF DE LIAISON

(30) Priority: 17.03.2014 IT BS20140060
(43) Date of publication of application: 25.01.2017
(73) Proprietor: General Fittings S.p.A, 25064 Gussago (IT)
(72) Inventor: COMINCINI, Stefano, 25064 Gussago (IT)
(74) Representative: Chimini, Francesco
(86) International application number: PCT/IB2015/051818
(87) International publication number: WO 2015/140676

(56) References cited:
- FR-A1- 2 280 852
- US-A- 3 314 696
- US-A- 4 244 608

## Description

The present invention relates to a connection device between two components of a fluid distribution system. In particular, the connection device of the present invention is of the quick-fit type.

US 4 244 608 A shows a female coupling adapted for use with prior art male stems of the collared type, the coupling having a stem-receiving bore and two substantially parallel slots that intersect circumference portions of the bore. Two leg members of a generally U-shaped staple are inserted in and reciprocally movable in the coupling slots. Leg members have facing, substantially centrosymmetrical slots that open with the intersecting circumference portions of the bore when the staple is in the open and unlocked position. Locking tab portions of the leg members intersect the bore at the intersecting circumference portions when the leg members are reciprocated to a lock position and a spring means interconnecting the leg members retain free ends of the leg members against the coupling.

Quick-fit connections are known of for the connection of two components of a fluid distribution system, that is comprising two connecting parts which engage and disengage axially without the need for screwing/unscrewing or in any case without the use of tools or other external coupling means.

An example of such quick-fit couplings consists of clamp-couplings. In this type of fitting, in fact, one of the two parts comprises a gripper element which axially engages the other element following the engagement operation. For its disengagement, the clamp element must be pressed axially while separating the two parts of the fitting.

This and other similar types of fitting have the advantage of the rapidity of the coupling but the cost of a certain structural complexity and therefore higher production costs.

Furthermore, the uncoupling operation as described above is not particularly convenient or easy, especially in fittings of reduced dimensions.

The purpose of the present invention is to propose a connection device of the quick-fit type, which maintains a particularly simple structure and is easy and convenient to operate for the operator.

Such purpose is achieved by a connection device according to claim 1. The dependent claims describe preferred embodiments of the invention.

The characteristics and advantages of the connection device according to the invention will, in any case, be evident from the description given below of its preferred embodiments, made by way of a non-limiting example with reference to the appended drawings, wherein:

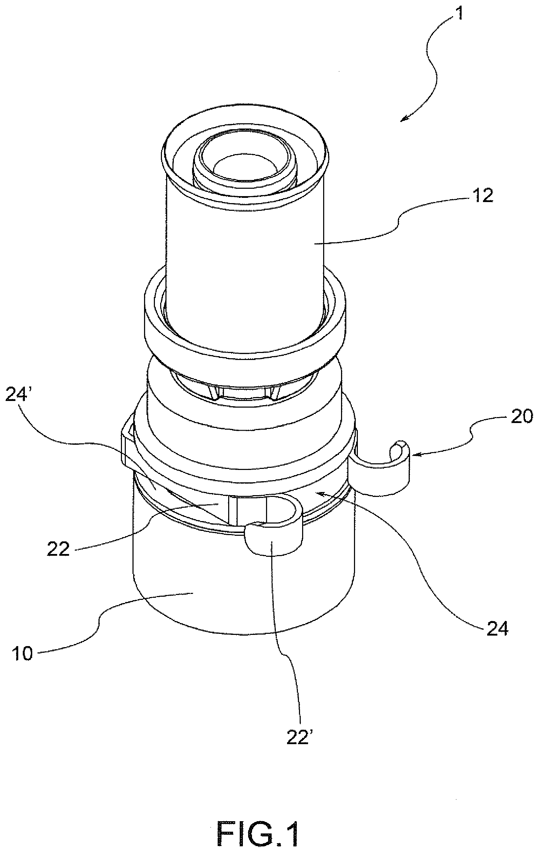

Figure 1 is a perspective view of the connection device according to the present invention, in one embodiment.

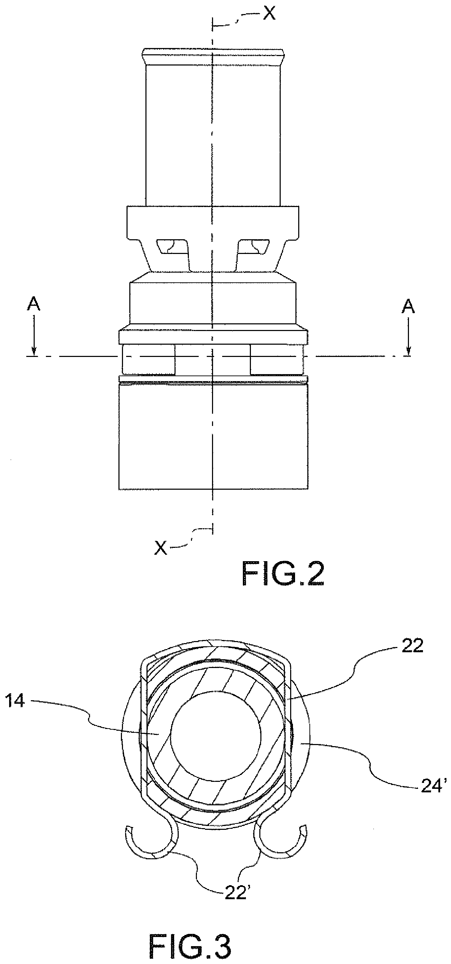

Figure 2 is an elevation view of the connection device;
Figure 3 is a transversal cross-section of the connection device along the line A-A in figure 2;

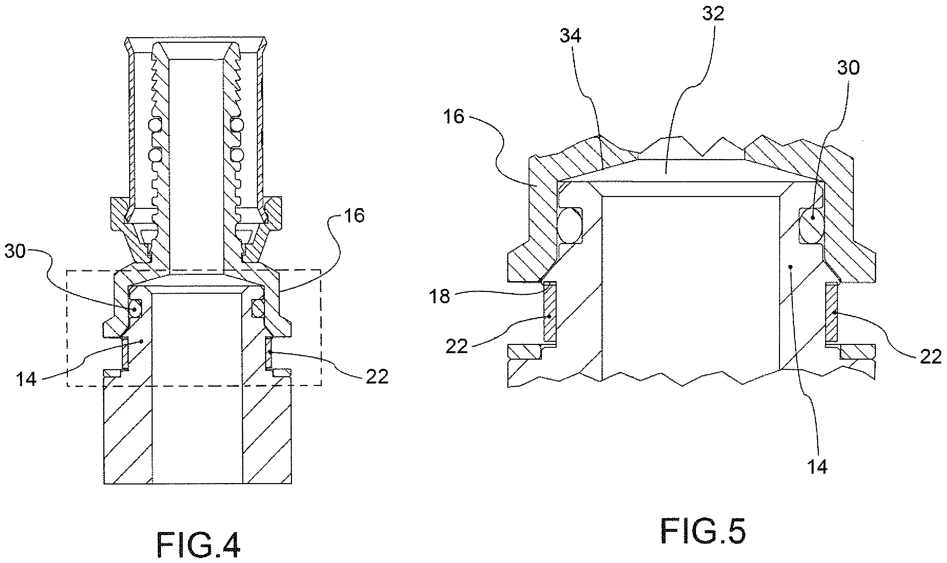

Figure 4 is an axial cross-section of the connection device;
Figure 5 is an enlarged view of the detail in the box in figure 4;

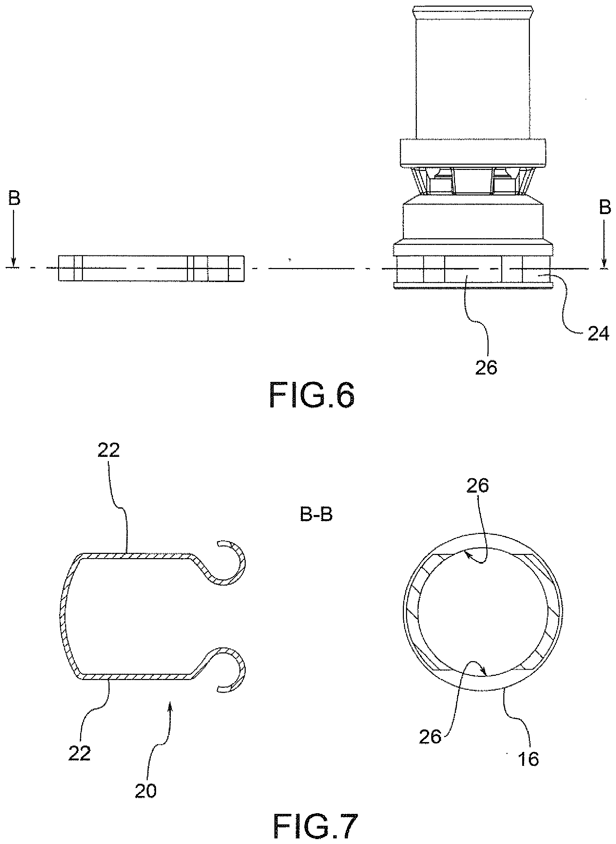

Figure 6 is a view in separate parts of a fitting of the connection device and of the retention element; and
Figure 7 is a transversal cross-section of the components of figure 6 along the line B-B in figure 6.

In said drawings, reference numeral 1 globally denotes a connection device, of two components of a fluid distribution system according to the invention.

The device comprises a first fitting 10 connectable to or made on a respective first component and a second fitting 12 connectable to or made on a respective second component. For example, said first fitting 10 is a coupling fixed for example by screwing, or made directly on an apparatus of the fluid distribution system, while the second fitting 12 is suitable for connection to a tube.

In all cases, the first fitting 10 can be fitted into the second fitting 12 along a longitudinal insertion axis X to permit the sealed passage of the fluid from one to the other of said components of the fluid distribution system.

To such purpose, the first fitting 10 comprises a male end portion 14 while the second fitting 12 comprises a female end portion 16, that is a hollow portion, suitable to sealingly receive said male portion 14.

According to one aspect of the invention, in said male portion 14 at least one radial undercut 18 is made. For example, said radial undercut is defined by an annular groove. For reasons of symmetry, said radial undercut 18 is made at least on two diametrically opposite portions of the outer side wall of the male portion 14.

The female portion 16 supports a retention element 20 having at least one elastic arm 22 movable in the radial direction, i.e. in a plane perpendicular to the engagement axis X, in a respective seat element 24. The elastic arm 22 is movable thanks to its elasticity between a locking position and a release position.

Said seat element 24 is open towards the radial undercut 18 of the male portion 14 so that the elastic arm 22, when in said locking position, engages in said radial undercut 18, preventing any axial movement of the first fitting 10 in relation to the second fitting 12.

The retention element 20 is a "U" shape and comprises two elastic arms 22 suitable to engage diametrically opposite portions of the radial undercut 18.

Preferably the seat element 24 is defined by a recess made in the side wall of the female portion 16. In one embodiment, the retention element has a "U" shape which embraces the side wall of the female portion 16 of the second fitting. In the preferred case in which the male and female portions are a cylindrical shape, the seat element 24 comprises a pair of lateral millings 24' parallel and perpendicular to the engagement axis X, in each of which an elastic arm 22 is positioned. Each of said lateral millings 24' creates in the side wall of the female portion 16 a respective split 26 open toward the radial undercut 18 of the male portion 14, when the latter is fully inserted in the female portion 16.

In a preferred embodiment, each elastic arm 22 finds itself in the blocking position when not subjected to an external stress and passes into the release position when radially distanced from its seat element 24. In other words, considering the preferred embodiment illustrated in the drawings, when the retention element 20 is in the rest position, i.e it is not stressed, the elastic arms 22 are substantially parallel to each other and in such position penetrate into the cavity of the female portion 16 engaging the radial undercut 18 of the male portion 14. When an operator acts on the elastic arms 22, spreading them apart, said arms 22 disengage from the radial undercut 18 to the extent needed to release the first fitting 10.

To such purpose, in a preferred embodiment said elastic arms 22 are configured to be easily engageable by an operator to be spread apart. For example, each elastic arm 22 ends with a gripping end 22' emerging from the seat element 24 suitable to be engaged to distance the elastic arm 22 from its respective seat 24. In particular, the gripping ends 22' of the two elastic arms are shaped and distanced from each other in such a way that the positioning of the operator's thumb between said gripping ends causes a shift of both elastic arms 22 into the release position, i.e. the spreading apart of said arms. It is however possible to act on a single gripping end 22' to generate the shift of both elastic arms into the release position.

According to one embodiment, the male portion 14 is provided with an annular sealing element 30 cooperating with the inner wall of the female portion 16. Preferably, said annular sealing element 30 is positioned axially between the end of the male portion 14 and the radial undercut 18.

Advantageously, the male portion 14 has a front end wall 32, for example of a conical shape, suitable to abut with a complementary bottom wall 34 of the female portion 16. When, during engagement phase, the operator moves said end wall to abut with the bottom wall, there is the certainty that the seat element 24, and thus the elastic arms 22, is aligned axially with the radial undercut 18.

It is evident from the description that the connection of the two fittings is particularly quick and easy for an operator. It is sufficient to keep the elastic arms of the retention element spread apart, for example by inserting the thumb between the ends of said arms while holding the corresponding fitting element, or by acting on only one of said ends, and fully inserting the male portion of the other fitting into the female portion of the first. At this point, it is sufficient to release the spring arms to complete the connection.

The disengagement process is just as quick and convenient.

It is to be noted that, when the two fittings are separated, the retention element remains in any case connected to one of them thanks to the elasticity of the elastic arms.

## Claims

1. Connection device between two components of a fluid distribution system, comprising:
- a first fitting (10) connectable to or made on a respective first component;
- a second fitting (12) connectable to or made on a respective second component;
where said first fitting can be fitted into said second fitting along a longitudinal insertion axis (X) to permit the sealed passage of the fluid from one to the other of said components,
wherein the first fitting comprises a male end portion (14), and wherein the second fitting comprises a female end portion (16) suitable to sealingly receive said male portion,
wherein at least one radial undercut (18) is made in said male portion wherein said female portion supports at least one retention element (20) having at least one elastic arm (22) movable in a radial direction in a respective seat element (24) between a blocking position and a release position, and wherein said seat element (24) is open towards said radial undercut so that the elastic arm, when in said blocking position, engages in said radial undercut (18), wherein said radial undercut (18) extends at least along two portions diametrically opposite the outer surface of the male portion (14), wherein said retention element (20) is U-shaped and comprises two elastic arms (22) suitable to engage said portions diametrically opposite the outer surface of the male portion (14), and wherein said retention element (20) has a rectangular cross section wherein the longer sides of the rectangle are parallel to said longitudinal insertion axis (X).

2. Connection device according to any of the previous claims, wherein the seat element (24) is defined by a recess made in the side wall of the female portion (16).

3. Connection device according to the previous claim, wherein each elastic arm (22) finds itself in the blocking position when not subjected to an external stress and passes into the release position when radially distanced from its seat element (24).

4. Connection device according to the previous claim, wherein the seat element (24) comprises a pair of lateral millings (24') parallel and perpendicular to the engagement axis (X), in each of which an elastic arm is positioned (22), each of said lateral millings (24') creating in the side wall of the female portion (16) a respective split (26) open towards the radial undercut (18) when the male portion(14) is fully inserted in the female portion (16).

5. Connection device according to claim 3 or 4, wherein each elastic arm ends with a gripping end (22') emerging from the seat element and suitable to be engaged to distance the elastic arm from its respective seat.

6. Connection device according to claims 1 and 5, wherein the gripping ends (22') of the two elastic arms (22) are shaped and distanced from each other in such a way that the positioning of the operator's thumb between said gripping ends causes a shift of both elastic arms into the release position.

7. Connection device according to any of the previous claims, wherein the male portion (14) is fitted with an annular sealing element (30) acting in conjunction with the inner wall of the female portion, said annular sealing element being axially positioned between the ends of the male portion and the radial undercut (18).

8. Connection device according to any of the previous claims, wherein the male portion has a front end wall (32) suitable to abut with a bottom wall (34) of the female portion, and wherein the seat element (24) is axially aligned with the radial undercut (18) when said end wall abuts with said bottom wall.

## Patentansprüche

1. Verbindungsvorrichtung zwischen zwei Komponenten eines Fluidverteilungssystems, umfassend:
- ein erstes Anschlussstück (10), das mit einer jeweiligen ersten Komponente verbindbar ist oder an dieser ausgebildet ist;
- ein zweites Anschlussstück (12), das mit einer jeweiligen zweiten Komponente verbindbar ist oder an dieser ausgebildet ist;
wobei das erste Anschlussstück entlang einer Längseinsetzachse (X) in das zweite Anschlussstück eingepasst werden kann, um den abgedichteten Durchgang des Fluids von der einen zu der anderen der Komponenten zu erlauben,
wobei das erste Anschlussstück einen männlichen bzw. aufzunehmenden Endabschnitt (14) umfasst, und wobei das zweite Anschlussstück einen weiblichen bzw. aufnehmenden Endabschnitt (16) umfasst, der geeignet ist, den männlichen Abschnitt dichtend aufzunehmen,
wobei zumindest eine radiale Hinterschneidung (18) in dem männlichen Abschnitt ausgebildet ist, wobei der weibliche Abschnitt zumindest ein Halteelement (20) stützt bzw. trägt, das zumindest einen elastischen Arm (22) aufweist, der in radialer Richtung in einem jeweiligen Sitzelement (24) zwischen einer Blockierposition und einer Freigabeposition bewegbar ist, und wobei das Sitzelement (24) in Richtung der radialen Hinterschneidung offen ist, so dass der elastische Arm in der Blockierposition in die radiale Hinterschneidung (18) eingreift, wobei sich die radiale Hinterschneidung (18) zumindest entlang zweier Abschnitte diametral gegenüberliegend zu der Außenfläche des männlichen Abschnitts (14) erstreckt, wobei das Halteelement (20) U-förmig ist und zwei elastische Arme (22) umfasst, die geeignet sind, in die Abschnitte diametral gegenüberliegend zu der Außenfläche des männlichen Abschnitts (14) einzugreifen, und wobei das Halteelement (20) einen rechteckigen Querschnitt aufweist, wobei die längeren Seiten des Rechtecks parallel zu der Längsachse (X) sind.

2. Verbindungsvorrichtung nach einem der vorhergehenden Ansprüche, wobei das Sitzelement (24) durch eine Aussparung definiert ist, die in der Seitenwand des weiblichen Abschnitts (16) ausgebildet ist.

3. Verbindungsvorrichtung nach dem vorhergehenden Anspruch, wobei sich jeder elastische Arm (22) in der Blockierposition befindet, wenn er keiner äußeren Beanspruchung ausgesetzt ist, und in die Freigabeposition übergeht, wenn er radial von seinem Sitzelement (24) beabstandet ist.

4. Verbindungsvorrichtung nach dem vorhergehenden Anspruch, wobei das Sitzelement (24) ein Paar laterale Fräsungen (24') parallel und senkrecht zu der Eingriffsachse (X) umfasst, in denen jeweils ein elastischer Arm (22) positioniert ist, wobei jede der lateralen Fräsungen (24') in der Seitenwand des weiblichen Abschnitts (16) einen entsprechenden Spalt (26) erzeugt, der in Richtung der radialen Hinterschneidung (18) offen ist, wenn der männliche Abschnitt (14) vollständig in den weiblichen Abschnitt (16) eingesetzt ist.

5. Verbindungsvorrichtung nach Anspruch 3 oder 4, wobei jeder elastische Arm mit einem Greifende (22') endet, das aus dem Sitzelement herausragt und zum Eingriff geeignet ist, um den elastischen Arm von seinem jeweiligen Sitz zu beabstanden.

6. Verbindungsvorrichtung nach den Ansprüchen 1 und 5, wobei die Greifenden (22') der beiden elastischen Arme (22) derart geformt und voneinander beabstandet sind, dass die Positionierung des Daumens der Bedienperson zwischen den Greifenden eine Verschiebung beider elastischer Arme in die Freigabeposition bewirkt.

7. Verbindungsvorrichtung nach einem der vorhergehenden Ansprüche, wobei der männliche Abschnitt (14) mit einem ringförmigen Dichtungselement (30) versehen ist, das in Verbindung mit der Innenwand des weiblichen Abschnitts wirkt, wobei das ringförmige Dichtungselement axial zwischen den Enden des männlichen Abschnitts und der radialen Hinterschneidung (18) positioniert ist.

8. Verbindungsvorrichtung nach einem der vorhergehenden Ansprüche, wobei der männliche Abschnitt eine vordere Endwand (32) aufweist, die geeignet ist, an einer Bodenwand (34) des weiblichen Abschnitts anzuliegen, und wobei das Sitzelement (24) axial mit der radialen Hinterschneidung (18) ausgerichtet ist, wenn die Endwand an der Bodenwand anliegt.

## Revendications

1. Dispositif de liaison entre deux composants d'un système de distribution de fluide, comprenant
- un premier raccord (10) adapté pour être connecté à ou être disposé sur un premier composant correspondant,
- un deuxième raccord (12) adapté pour être connecté à ou être disposé sur un deuxième composant correspondant,
où le premier raccord peut être introduit dans le deuxième raccord le long d'un axe d'insertion (X) pour permettre un passage étanche du fluide de l'un à l'autre des composants,
où le premier raccord comprend une partie d'extrémité mâle (14) et où le deuxième raccord comprend une partie d'extrémité femelle (16) adaptée pour recevoir de manière étanche la partie mâle,
où au moins une contre-dépouille radiale (18) est réalisée dans la partie mâle, où la partie femelle supporte au moins un élément de rétention (20) comportant au moins un bras élastique (22) mobile dans une direction radiale dans un élément de siège (24) correspondant entre une position de blocage et une position de relâche, et où l'élément de siège (24) est ouvert vers la contre-dépouille radiale si bien que le bras élastique, lorsqu'il est dans la position de blocage, s'engage dans la contre-dépouille radiale (18), où la contre-dépouille (18) s'étend au moins le long de deux parties diamétralement opposées à la surface extérieure de la partie mâle (14), où l'élément de rétention (20) présente une forme en U et comprend deux bras élastiques (22) adaptés pour s'engager dans les parties diamétralement opposées à la surface extérieure de la partie mâle (14), et où l'élément de rétention (20) présente une section transversale rectangulaire, où les côtés plus longs du rectangle sont parallèle à l'axe d'insertion (X).

2. Dispositif de liaison selon l'une quelconque des revendications précédentes, **caractérisé en ce que** l'élément de siège (24) est défini par un renfoncement réalisé dans la paroi latérale de la partie femelle (16).

3. Dispositif de liaison selon la revendication précédente, **caractérisé en ce que** chaque bras élastique (22) se trouve dans la position de blocage, lorsqu'il n'est pas soumis à un effort extérieur et passe à la position de relâche, lorsqu'il est radialement espacé de son élément de siège (24).

4. Dispositif de liaison selon la revendication précédente, **caractérisé en ce que** l'élément de siège (24) comprend une paire de fraisages latéraux (24') parallèles et transversaux à l'axe d'insertion (X), dans chacune d'elles, un bras élastique (22) étant positionné, chacun des fraisages latéraux (24') créant une fente (26) correspondante ouverte vers la contre-dépouille radiale (18), lorsque la partie mâle (14) est entièrement insérée dans la partie femelle (16).

5. Dispositif de liaison selon la revendication 3 ou 4, **caractérisé en ce que** chaque bras élastique se termine sur une extrémité de préhension (22') émergeant de l'élément de siège et adapté pour être utilisé pour éloigner le bras élastique de son siège respectif.

6. Dispositif de liaison selon la revendication 1 et 5, **caractérisé en ce que** les extrémités de préhension (22') des deux bras élastiques (22) sont configurées et espacées l'un de l'autre d'une façon telle que le positionnement du pouce de l'opérateur entre les extrémités de préhension cause un déplacement des deux bras élastiques dans la position de relâche.

7. Dispositif de liaison selon l'une des revendications précédentes, **caractérisé en ce que** la partie mâle (14) est pourvu d'un élément d'étanchéité annulaire (30) coopérant avec la paroi intérieure de la partie femelle, l'élément d'étanchéité annulaire étant positionné axialement entre les extrémités de la partie mâle et la contre-dépouille radiale (18).

8. Dispositif de liaison selon l'une des revendications précédentes, **caractérisé en ce que** la partie mâle comprend une paroi d'extrémité avant (32) adaptée pour buter contre une paroi de fond (34) de la partie femelle, et **en ce que** l'élément de siège (24) est axialement aligné avec la contre-dépouille radiale (18), lorsque la paroi d'extrémité bute sur la paroi de fond.
